# EUROPÄISCHE PATENTSCHRIFT

(11) **EP 1 196 702 B1**
(45) Veröffentlichungstag und Bekanntmachung des Hinweises auf die Patenterteilung: **06.11.2002**
(21) Anmeldenummer: 00953052.8
(22) Anmeldetag: 15.07.2000
(51) Int. Cl.: F16H 61/00, G01M 13/02

(54) **VERFAHREN ZUR PRÜFUNG DER FUNKTION EINES ELEKTROHYDRAULISCH GESTEUERTEN AUTOMATGETRIEBES**
METHOD FOR TESTING THE FUNCTION OF AN ELECTROHYDRAULICALLY CONTROLLED AUTOMATIC TRANSMISSION
PROCEDE POUR VERIFIER LA FONCTION D'UNE BOITE DE VITESSES AUTOMATIQUE A COMMANDE ELECTROHYDRAULIQUE

(30) Priorität: 22.07.1999 DE 19934486
(43) Veröffentlichungstag der Anmeldung: 17.04.2002
(73) Patentinhaber: ZF FRIEDRICHSHAFEN Aktiengesellschaft, 88038 Friedrichshafen (DE)
(72) Erfinder: HENNEKEN, Markus, D-88079 Kressbronn (DE)
(86) Internationale Anmeldenummer: EP0006779
(87) Internationale Veröffentlichungsnummer: WO01007802

(56) Entgegenhaltungen:
- EP-A- 0 430 296
- DE-A- 19 643 305
- US-A- 5 737 979

## Beschreibung

Die vorliegende Erfindung betrifft eine Verfahren zur Prüfung der Funktion eines elektrohydraulisch gesteuerten Automatgetriebes auf einem Prüfstand durch Simulation eines Fahrbetriebes, wobei die Eingangswelle des Getriebes mit einer Antriebsmaschine verbunden wird, die vorgegebene Drehzahlen und Lastverhältnisse erzeugt.

Bei der Serienproduktion von elektrohydraulischen Automatgetrieben tritt eine Streuung durch verschiedene Komponenten und Bauteile innerhalb ein- und derselben Serie auf. Dies kann dazu führen, daß der Schaltkomfort bei zwei identischen Fahrzeugen mit identischen Automatgetrieben unterschiedlich ausfällt.

Es ist daher bei der Serienproduktion derartiger Getriebe üblich, die Funktion auf einem Prüfstand zu überprüfen, der einen Fahrzeugbetrieb simuliert, wobei mittels Anund Abtriebsmaschinen bestimmte Drehzahlen und Lastverhältnisse simuliert werden, um dann einen Gangwechsel zu steuern. Der Gangwechsel wird anhand von Meßdaten von An- und Abtriebsdrehzahl und Momentensensoren auf Ablauf nach einer vorgegebenen Spezifikation geprüft. Diese Prüfung bedarf des lastlosen Durchschaltens des Getriebes vor der eigentlichen Prüfung zum Entlüften der Kupplungen und Leitungen, um einen reproduzierbaren Prüflauf der Lastschaltungen zu erzielen.

Um einen möglichst einheitlichen Schaltkomfort bei den verschiedenen Getrieben einer Bauserie zu erhalten, wurde bereits in der DE-C 34 36 190 vorgeschlagen, adaptive Funktionen in der elektronischen Getriebesteuerung zu verwenden. Dies erfolgtmittels einer Einrichtung zur elektronischen Steuerung, wobei die elektrohydraulisch betätigbaren Reibelemente im Getriebe die Umschaltung zwischen den verschiedenen Übersetzungsstufen bewirken und eine den Schaltvorgang charakterisierende Istgröße, insbesondere die Schleifzeit, die Schaltzeit oder der Drehzahlgradient während der Schleifzeit mit einer gespeicherten Sollgröße verglichen wird, wobei bei Überschreiten einer vorgebbaren Abweichung ein Korrekturwert gespeichert wird. Dieser Korrekturwert wirkt für die darauffolgenden Schaltvorgänge korrigierend im Sinne der adaptiven Steuerung auf die Bildung einer Steuergröße für die Reibelemente, insbesondere den hydraulischen Druck ein. Diese Einrichtung eignet sich insbesondere für Automatgetriebe, die infolge eines Defektes in einer Kundendienstwerkstatt ausgetauscht werden müssen, da sonst die in der elektronischen Getriebesteuerung gespeicherten adaptiven Daten mit dem tatsächlichen mechanischen Teil des Automatgetriebes nicht mehr übereinstimmen.

Ein Verfahren zur Bestimmung von Kenngrößen eines elektrohydraulisch gesteuerten Automatgetriebes auf einem Prüfstand mit schnellerer Anbindung der elektronischen Getriebesteuerung ist aus der WO98/17929 der Anmelderin bekannt. Hierbei werden auf einem Prüfstand Schaltungen in die einzelnen Übersetzungsstufen des Automatgetriebes nach-einander initiiert. Während der Schaltübergänge wird eine Getriebeeingangs- und Getriebeausgangsdrehzahl sowie ein Getriebeeingangs- und Getriebeausgangsmoment sowie deren zeitliche Verläufe gemessen. Aus diesen Meßgrößen werden als Kenngrößen des Automatgetriebes für die während des Schaltübergangs zuschaltende Kupplung eine Füllzeit, ein Fülldruck, eine Reaktionszeit, ein Reibwert der Lamellen und eine Druckfluid-Charge bestimmt. Dieses Kenngrößen werden danach in einem Speicher abgelegt, so daß das elektronische Getriebesteuergerät in Abhängigkeit dieser Kenngrößen das Druckniveau und die Zeit des Schnellfülldruckes des Fülldruckes sowie das Druckniveau des Schaltdruckes korrigieren kann.

Hierbei kann die gesamte Toleranzkette geprüft werden, so daß Steuerung- und Getriebetoleranzen vollständig erfaßt werden. Dies führt zu größeren Bauteiltoleranzen und damit zu einer kostengünstigeren Fertigung. Da die das jeweilig Automatgetriebe kennzeichnenden Größen in einem Speicher abgelegt werden, erhält man auch bei großen Abweichungen vom Ist- zum Sollwert eine schnellere Übereinstimmung der Ist- und Sollwerte im elektronischen Getriebesteuergerät. Ein lastloses Durchschalten des Automatgetriebes vor der eigentlichen Prüfung zum Entlüften der Kupplungen und Leitungen ist jedoch auch hierbei erforderlich.

Aufgabe der vorliegenden Erfindung ist es, ein Verfahren der eingangs genannten Art zu schaffen, bei dem ohne separates Entlüften der hydraulischen Komponenten und in kürzerer Zeit das Getriebe aus der Serienproduktion in seiner Funktion überprüft werden kann.

Ausgehend von einem Verfahren der eingangs näher genannten Art erfolgt die Lösung dieser Aufgabe mit den im Anspruch 1 angegebenen Merkmalen; vorteilhafte Ausgestaltungen sind in den Unteransprüchen beschrieben.

Es wurde festgestellt, daß mit dem erfindungsgemäßen Verfahren der Vorteil erzielt wird, daß eine sehr große Zeitersparnis in der Größenordnung von 80 % erzielbar ist. Ferner wird der Vorteil erzielt, daß bei der Prüfung eines Automatgetriebes mit dem erfindungsgemäßen Verfahren durch Entfallen der dynamischen Anteile, wie sie bisher erforderlich waren, die Fehler besser erkannt werden, wodurch die Qualität des Schaltkomforts weiter gesteigert wird. Durch die Zuordnung von "eingestelltem Strom" zum "übertragenen Moment" können quantitativ sehr genaue Aussagen über die Qualität der Schaltfunktionen des Automatgetriebes gemacht werden. Toleranzen zwischen den einzelnen Automatgetrieben ein- und derselben Serie können über einen Toleranzabgleich mit Ablage der Daten in der elektronischen Getriebesteuerung ausgeglichen werden, wodurch die Qualität des Endproduktes noch weiter gesteigert wird.

Die Erfindung sieht also vor, daß das Automatgetriebe auf einem Prüfstand mit einer Antriebsmaschine kleiner Leistung und mit einer Drehmomentmeßnabe anstelle der Abtriebsmaschine überprüft wird. Diese Prüfung der im Getriebe vorhandenen Schaltelemente, wie Bremsen und Kupplungen, erfolgt also bei stehendem Abtrieb und bei einer niedrigen Antriebsdrehzahl, die gerade ausreicht, um die Druckstellglieder im Getriebe mit Hydraulikdruck zu versorgen und deren Betrieb sicherzustellen. Erfindungsgemäß wird das zu prüfende Schaltelement über das Druckstellglied in Schlupf gebracht und anschließend wieder geschlossen. Dieser Vorgang benötigt nicht mehr als zwei Sekunden und erspart das separate Entlüften der hydraulischen Komponenten vor Durchführung der Prüfung.

Die Kenngröße für die richtige Funktion des überprüften Schaltelementes ist dabei der Stellgliedstrom, bei dem das Schaltelement in Schlupf geht bzw. der Schlupf beim Schließen gegen Null geht.

Eine weitere Kenngröße ist die Hysterese der Stromschwellen zwischen dem Öffnen und dem Schließen des Schaltelementes oder aber die Schlupfdrehzahl des Schaltelementes oder auch das an die Drehmomentmeßnabe übertragene Drehmoment.

Eine weitere Kenngröße ist die Füllzeit, welche benötigt wird, um ein Schaltelement kraftschlüssig zu schalten. Der so ermittelte tatsächlich aufgenommene Volumenstrom ist ein Maß für die Toleranz des Lüftspiels, die Druckversorgung und für die Fehlerfindung (Undichtigkeiten, Drosselstellen ...).

Ein wesentlicher Vorteil, speziell für eine Fehlersuche und eine Eingrenzung von Fehlerursachen, liegt darin, daß im Laufe des Prüfverfahrens die zu prüfenden Schaltelemente nacheinander zugeschaltet werden können, d. h., die bereits geschalteten Schaltelemente bleiben geschlossen und das neu zu prüfende Schaltelement wird kraftschlüssig geschaltet.

Beispielhaft sei erwähnt, daß bei der Überprüfung eines Fünf-Stufen-Automatgetriebes eine Zeitersparnis bei der Überprüfung mit dem erfindungsgemäßen Verfahren von 80 % festgestellt wurde.

## Patentansprüche

1. Verfahren zur Prüfung der Funktion eines elektrohydraulisch gesteuerten Automatgetriebes auf einem Prüfstand durch Simulation eines Fahrzeugbetriebes, wobei die Eingangswelle des Getriebes mit einer Antriebsmaschine verbunden wird, die vorgegebene Drehzahlen und Lastverhältnisse erzeugt, **dadurch gekennzeichnet, daß** die Abtriebswelle des Getriebes mit einer feststehenden Drehmomentmeßnabe verbunden wird und daß die Prüfung von im Getriebe vorhandenen Schaltelementen bei blockierter Abtriebswelle mit einer Antriebsdrehzahl erfolgt, die gerade ausreicht, die Druckstellglieder für die Schaltelemente mit Hydraulikdruck zu versorgen, wobei eine Kenngröße ermittelt und angezeigt bzw. abgespeichert wird.

2. Verfahren nach Anspruch 1, **dadurch gekennzeichnet, daß** als Kenngröße der Stellgliedstrom verwendet wird, bei dem das Schaltelement in Schlupf geht, bzw. bei dem der Schlupf beim Schließen des Schaltelementes gegen Null geht.

3. Verfahren nach Anspruch 1, **dadurch gekennzeichnet, daß** als Kenngröße die Hysterese der Stromschwelle zwischen Öffnen und Schließen des Schaltelementes verwendet wird.

4. Verfahren nach Anspruch 1, **dadurch gekennzeichnet, daß** als Kenngröße die Schlupfdrehzahl des Schaltelementes verwendet wird.

5. Verfahren nach Anspruch 1, **dadurch gekennzeichnet, daß** als Kenngröße das der Drehmomentnabe übertragene Drehmoment verwendet wird.

6. Verfahren nach Anspruch 1, **dadurch gekennzeichnet, daß** als Kenngröße die Zeit verwendet wird, die benötigt wird, um ein Schaltelement kraftschlüssig zu schalten.

7. Verfahren nach mindestens einem der vorhergehenden Ansprüche, **dadurch gekennzeichnet, daß** die einzelnen Schaltelemente nacheinander zugeschaltet werden, wobei die schon geprüften Schaltelemente geschlossen bleiben.

## Claims

1. The invention relates to a method for testing the function of an electrohydraulically controlled automatic transmission on a test stand by simulating a vehicle operation whereby the transmission input shaft is linked to a drive unit producing preset speeds and loads, **characterized in that** the transmission output shaft is linked to a stationary torque-measuring hub and that the measuring of shift elements of the transmission with blocked output shaft is effected at an input speed just sufficient for hydraulic pressure supply of the hydraulic actuators for the shift elements, whereby a parameter is determined, displayed and stored.

2. Method according to claim 1, **characterized in that** the parameter used is the actuator current at which the shift element slips or at which the slip tends toward zero when the shift element is closed.

3. Method according to claim 1, **characterized in that** the parameter used is the hysteresis of the current threshold between the opening and closing of the shift element.

4. Method according to claim 1, **characterized in that** the parameter used is the slip speed of the shift element.

5. Method according to claim 1, **characterized in that** the parameter used is the torque transmitted to the torque hub.

6. Method according to claim 1, **characterized in that** the parameter used is the time needed for frictional connection of a shift element.

7. Method according to at least one of the preceding claims, **characterized in that** the individual shift elements are successively engaged, whereby the shift elements already measured remain closed.

## Revendications

1. Procédé pour contrôler le fonctionnement d'une boîte de vitesses automatique à commande électro-hydraulique sur un banc d'essai par simulation du fonctionnement d'un véhicule, dans lequel l'arbre d'entrée de la boîte de vitesses est relié à un moteur d'entraînement, qui produit des vitesses de rotation et conditions de charge prédéterminées, **caractérisé en ce que** l'arbre de sortie de la boîte de vitesses est relié à un moyeu de mesure du couple fixe et **en ce que** le contrôle d'éléments de changement présents dans la boîte de vitesses s'effectue alors que l'arbre de sortie est bloqué avec une vitesse de rotation d'entrée qui suffit juste pour alimenter en pression hydraulique des actionneurs à pression pour les éléments de changement, une grandeur caractéristique étant relevée et affichée ou mémorisée.

2. Procédé selon la revendication 1, **caractérisé en ce qu'**on utilise comme grandeur caractéristique le courant des actionneurs auquel l'élément de changement entre en patinage, ou auquel le patinage tend vers zéro lors de la fermeture de l'élément de changement.

3. Procédé selon la revendication 1, **caractérisé en ce qu'**on utilise comme grandeur caractéristique l'hystérésis du seuil de courant entre l'ouverture et la fermeture de l'élément de changement.

4. Procédé selon la revendication 1, **caractérisé en ce qu'**on utilise comme grandeur caractéristique la vitesse de rotation de patinage de l'élément de changement.

5. Procédé selon la revendication 1, **caractérisé en ce qu'**on utilise comme grandeur caractéristique le couple transmis au moyeu de couple.

6. Procédé selon la revendication 1, **caractérisé en ce qu'**on utilise comme grandeur caractéristique le temps qui est nécessaire pour manoeuvrer un élément de changement par action de force.

7. Procédé selon au moins l'une des revendications précédentes, **caractérisé en ce que** les différents éléments de changement sont fermés l'un après l'autre, les éléments de changement déjà contrôlés restant alors fermés.
